# EUROPÄISCHE PATENTSCHRIFT

(11) **EP 1 594 937 B1**
(45) Veröffentlichungstag und Bekanntmachung des Hinweises auf die Patenterteilung: **21.03.2012**
(21) Anmeldenummer: 04703762.7
(22) Anmeldetag: 21.01.2004
(51) Int. Cl.: C09K 5/10, C09K 5/20

(54) **WÄRMETRÄGERFLÜSSIGKEITEN MIT GLASKORROSIONSSCHUTZ INSBESONDERE FÜR SOLARANLAGEN**
THERMAL LIQUIDS PROVIDING GLASS CORROSION PROTECTION ESPECIALLY FOR SOLAR SYSTEMS
FLUIDES CALOPORTEURS AYANT UNE PROTECTION CONTRE LA CORROSION DU VERRE ET DESTINES NOTAMMENT AUX INSTALLATIONS SOLAIRES

(30) Priorität: 21.01.2003 DE 10302093
(43) Veröffentlichungstag der Anmeldung: 16.11.2005
(73) Patentinhaber: BASF SE, 67056 Ludwigshafen (DE)
(72) Erfinder: WENDEROTH, Bernd, 69488 Birkenau (DE); KORMANN, Claudius, 67105 Schifferstadt (DE); ZÖLLNER, Horst, 67376 Harthausen (DE); MESZAROS, Ladislaus, 67112 Mutterstadt (DE); HILLERNS, Frank, 20257 Hamburg (DE)
(86) Internationale Anmeldenummer: PCT/EP2004/000447
(87) Internationale Veröffentlichungsnummer: WO 2004/065516

(56) Entgegenhaltungen:
- EP-A- 0 971 013
- DE-A- 19 525 090
- DE-A- 19 605 509
- GB-A- 945 638
- GB-A- 2 059 432
- US-A- 4 452 758
- US-A- 5 387 360
- DATABASE WPI Section Ch, Week 199427 Derwent Publications Ltd., London, GB; Class E19, AN 1994-218517 XP002278178 & CN 1 076 956 A (ZHAO Y) 6. Oktober 1993 (1993-10-06)

## Beschreibung

Die vorliegende Erfindung betrifft insbesondere boratfreie Konzentrate auf Basis von Glykolen mit Glaskorrosionsschutz für Wärmeträgerflüssigkeiten, insbesondere für Solaranlagen, enthaltend Amine und gegebenenfalls stabilisierte Silikate sowie Kohlenwasserstoffthiazole und triazole; daneben können noch weitere Korrosionsinhibitoren und andere Komponenten enthalten sein. Weiterhin betrifft die Erfindung gebrauchsfertige wässrige Wärmeträgerflüssigkeiten, welche auf den genannten Konzentraten basieren, und deren Verwendung in Solaranlagen.

Konzentrate für Wärmeträgerflüssigkeiten, insbesondere für Solaranlagen, enthalten meist Alkylenglykole, vor allem 1,2-Propylenglykol oder Ethylenglykol, als Hauptkomponente. Zur Verwendung in Solaranlagen werden sie mit Wasser verdünnt und sollen neben Frostschutz für eine gute Wärmeübertragung sorgen. Alkylenglykol/Wasser-Mischungen sind allerdings bei den bei intensiver Sonneneinstrahlung und insbesondere den bei Stillstand der Anlage auftretenden hohen Temperaturen sehr korrosiv; deswegen müssen die unterschiedlichen Metalle, wie beispielsweise Kupfer, Messing, Stahl, Gusseisen (Grauguss), Blei, Zinn, Chrom, Zink, Aluminium, Magnesium und deren Legierungen sowie Lötmetalle wie beispielsweise Lötzinn (Weichlot), die prinzipiell im Wärmeträgerkreislauf von Solaranlagen vorkommen können ausreichend vor den verschiedensten Korrosionsarten, zum Beispiel Lochfraßkorrosion, Spaltkorrosion, Erosion oder Kavitation, geschützt werden. Zur Verwendung als Korrosionsinhibitoren für Metalle in derartigen Systemen sind im Stand der Technik bereits eine Vielzahl chemischer Individuen bekannt.

Im Stand der Technik gibt es eine Reihe von Patenten und Patentanmeldungen, in denen Wärmeträgerflüssigkeiten für Solaranlagen mit wirksamen Korrosionsinhibitor-Formulierungen für Metalle beschrieben werden, von denen nachfolgend einige aufgeführt werden.

DE 195 25 090 A1 beschreibt Wärmeträgerflüssigkeiten zur Verhinderung der Abscheidung von Feststoffen in Solarabsorbem aus 1,2-Propylenglykol, Polyethylenglykol mit Molmasse 400 und Wasser, in denen als Korrosionsinhibitoren Borax, Silikat, Dicarbonsäuren, Natriumbenzoat, Benzotriazol, Tolutriazol, Natriumnitrat oder Natriumnitrit verwendet werden.

EP 0 971 013 A1 beschreibt wässrige Wärmeträger für Solaranlagen, welche Tri- und/oder Tetraethylenglykol, 1,2-Propylenglykol und/oder Ethylenglykol enthalten, gekennzeichnet durch einen Gehalt an Boraten, Silikaten, Mono- oder Dicarbonsäuren, Natriumbenzoat, Benzotriazolen, Tolutriazolen, Nitriten oder Nitraten als Korrosionsinhibitoren.

EP 0 109 377 A2 beansprucht einen Sonnenkollektor, der eine Wärmeträgerflüssigkeit bestehend aus Monoethylenglykol oder Glyzerin, Wasser, Ameisensäure und einem quaternären Ammoniumsalz enthält.

EP 0 092 687 B1 beschreibt eine auch für Solarsysteme geeignete wässrige korrosionsverhindernde Wärmeübertragungszusammensetzung, die einen Alkohol wie zum Beispiel Ethylen- oder Propylenglykol und ein Organosiloxan-/Silikat-Copolymer enthält und in Abwesenheit von Nitrit mindestens ein Nitratsalz enthält. Weiterhin können bekannte Korrosionsinhibitoren für Metalle wie Molybdat, Borat, Phosphat, Benzoat, Hydroxybenzoat, Nitrit, Tolutriazol, Mercaptobenzthiazol und Benzotriazol enthalten sein.

GB 2,059,432 beschreibt Kühlmittel für den Einsatz in Automobil-Kühlsystemen, die 1,2-Alkylenglykole, Alkalisalze der Borsäure, Alkalisilikate, Benzotriazole, Mercaptobenzimidazole und Nitrophenole enthalten.

Inzwischen gibt es für Solaranlagen neuere Sonnenkollektionen aus Spezialgläsern, zum Beispiel aus speziellen Borosilikatgläsern, bei denen die Wärmeträgerflüssigkeit nicht mehr durch Metallröhren innerhalb von evakuierten Glasröhren, sondern direkt durch die Glasröhren strömt. Dabei können die inneren Oberflächen der Glasröhren, welche von den Wärmeträgerflüssigkeiten durchströmt werden, korrosiv angegriffen werden, was zu einer Eintrübung und damit verbundenen verringerten Energieaufnahme durch Sonneneinstrahlung führt. Die auf dem Markt befindlichen Wärmeträgerflüssigkeiten des Standes der Technik sind in dieser Hinsicht noch deutlich verbesserungsbedürftig.

Durch den bekannten Stand der Technik, der vorstehend genannt wurde, wird die Problematik der Glaskorrosion nicht beschrieben und ist bisher nicht gelöst.

Aufgabe der vorliegenden Erfindung war es daher, neue Konzentrate und daraus herzustellende Wärmeträgerflüssigkeiten für Solaranlagen bereitzustellen. Es soll sich dabei insbesondere um Solaranlagen handeln, bei denen die Wärmeträgerflüssigkeit direkten Kontakt mit dem Glas hat, beispielsweise den Glasröhren. Die zu entwickelnden Flüssigkeiten sollen die Nachteile der Glaskorrosion des Standes der Technik nicht mehr aufweisen.

Diese Aufgabe wird gelöst durch Wärmeträgerflüssigkeits-Konzentrate mit Glaskorrosionsschutz, insbesondere für Solaranlagen, enthalten neben mindestens einem Glykol
a) 0,05 bis 10 Gew.-%, vorzugsweise 0,1 bis 5 Gew.%, bezogen auf die Gesamtmenge des Konzentrates, eines oder mehrerer aliphatischer Amine der allgemeinen Formel (I), 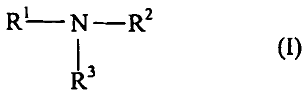 wobei R¹ bis R³ gleich oder verschieden sein können, und Wasserstoff, gegebenenfalls verzweigtes C₁-C₉-Alkyl oder C₁-C₉-Hydroxyalkyl bedeuten,
b) 0,005 bis 3 Gew.-%, vorzugsweise 0,01 bis 1 Gew.-%, bezogen auf die Gesamtmenge des Konzentrates, ein oder mehrere Silikate, die gegebenenfalls stabilisiert sind,
c) 0 bis 3 Gew.-%, vorzugsweise 0,01 bis 3 Gew.%, insbesondere 0,05 bis 1 Gew.-%, bezogen auf die Gesamtmenge des Konzentrates, einen oder mehrere Korrosionsinhibitoren ausgewählt aus der Gruppe der Kohlenwasserstofftriazole und der Kohlenwasserstoffthiazole,
d) 0 bis 5 Gew.-%, vorzugsweise 0,01 bis 1 Gew.-%, bezogen auf die Gesamtmenge des Konzentrates, ein oder mehrere Alkalimetall-, Ammonium- oder substituierte Ammoniummolybdate, und
e) 0 bis 1 Gew.-%, vorzugsweise 0,1 bis 0,5 Gew.-%, bezogen auf die Gesamtmenge des Konzentrates, ein oder mehrere polymere Hartwasserstabilisatoren,
dadurch gekennzeichnet, dass das Konzentrat kein Borat enthält.

Die erfindungsgemäßen Konzentrate für Wärmeträgerflüssigkeiten können in herkömmlichen Solaranlagen, aber insbesondere in neueren Systemen aus Spezialglas verwendet werden, bei denen die Wärmeträgerflüssigkeit nicht mehr durch Metallröhren innerhalb von evakuierten Glasröhren, sondern direkt durch die Glasröhren strömt, wodurch ein besonderer Schutz der inneren Glasoberflächen gegen Eintrübung durch Korrosion erforderlich ist.

Es wurde gefunden, dass durch die Kombination der erfindungsgemäß eingesetzten Amine mit Silikaten, also der Komponenten a) und b), ein wirkungsvoller Korrosionsschutz bei Solaranlagen, insbesondere solchen mit direktem Kontakt zwischen der Wärmeträgerflüssigkeit und dem Glas, etwa den Glasröhren, erreicht werden kann.

Sämtliche der in der vorliegenden Anmeldung gemachten Mengenangaben beziehen sich auf die Gesamtmenge des Konzentrates.

In einer bevorzugten Ausführungsform sind die Reste R¹ bis R³ ausgewählt aus Wasserstoff, Alkylresten mit 2 bis 9 C-Atomen und Alkylresten mit 1 bis 9 C-Atomen, die einen oder mehrere Hydroxysubstituenten aufweisen. Insbesondere sind die Reste R¹ bis R³ ausgewählt aus Wasserstoff und Alkylgruppen mit 3 bis 4 C-Atomen und Alkylresten 3 bis 4 C-Atomen, die einen oder mehrere Hydroxysubstituenten aufweisen.

Beispiele für bevorzugte Amine sind Ethylamin, Propylamin, Isopropylamin, n-Butylamin, Isobutylamin, sec-Butylamin, tert-Butylamin, n-Butylamin, n-Pentylamin, n-Hexylamin, n-Heptylamin, n-Octylamin, i-Nonylamin, Diethylamin, Di-n-propylamin, Di-i-propylamin, Di-n-butylamin, Di-i-butylamin, Triethylamin, Di-i-propylamin, Butyldiethanolamin, Mono-, Di- und Triethanolamin.

Im Rahmen der vorliegenden Erfindung sind insbesondere alkylsubstituierte Amine bevorzugt, in denen mindestens ein Alkylrest mindestens einen Hydroxysubstituenten trägt.

Meist bevorzugt wird für die Komponente a) Di-i-propanolamin oder Butyldiethanolamin verwendet.

In einer weiteren bevorzugten Ausführungsform enthält die Komponente b) mindestens ein Alkalimetallsilikat, wobei insbesondere die in der EP-A 0 189 527 beschriebenen Silikate in Betracht kommen. Beispiele sind Alkaliorthosilikate, Alkalimetasilikate, Alkalitetrasilikate und Alkalisilikate. Dabei sind die Natriumsalze bevorzugt. Insbesondere wird Natriummetasilikat verwendet.

Das Alkalimetallsilikat wird dabei weiterhin vorzugsweise durch übliche Organosilikophosphonate, beispielsweise gemäß der EP-A 0 189 527 oder der DE-OS 29 12 430 oder übliche Organosilikosulfonate, beispielsweise gemäß der EP-A 0 061 694 in üblichen Mengen stabilisiert. Durch Organosilikophosphonate stabilisierte Silikate sind dabei besonders bevorzugt.

Die in der EP-A 0 189 527 und der DE-OS 29 12 430 offenbarten Organosilikophosphonate und die in der EP-A 0 061 694 offenbarten Organosilikosulfonate sind ein wichtiger Bestandteil der vorliegenden Erfindung und durch Bezugnahme in die vorliegende Anmeldung eingeschlossen.

In einer weiteren bevorzugten Ausführungsform ist die Komponente c) eine Mischung aus mindestens zwei Kohlenwasserstoffthiazolen, eine Mischung aus mindestens einem Kohlenwasserstofftriazol und einem Kohlenwasserstoffthiazol, oder eine Mischung aus mindestens zwei verschiedenen Kohlenwasserstofftriazolen. Beispiele für bevorzugte Kohlenwasserstoffthiazole sind Benzthiazol und 2-Mercaptobenzthiazol.

Vorzugsweise wird eine Mischung aus mindestens zwei verschiedenen Kohlenwasserstofftriazolen eingesetzt. Diese sind insbesondere ausgewählt aus Benzotriazol, Tolutriazol und 1H-1,2,4-Triazol.

In einer weiteren bevorzugten Ausführungsform enthält die Komponente d) Natriummolybdat, insbesondere Natriummolybdat-Dihydrat.

In einer weiteren bevorzugten Ausführungsform enthält die Komponente d) mindestens einen Hartwasserstabilisator auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und Copolymeren aus ungesättigten Carbonsäuren und Olefinen.

Zusätzlich zu den genannten Inhibitorlsomponenten können beispielsweise auch noch lösliche Salze des Magnesiums von organischen Säuren, vorzugsweise Magnesiumbenzolsulfonat, Magnesiummethansulfonat, Magnesiumacetat oder Magnesiumpropionat, weiterhin Hydrocarbazole und/oder quaternierte Imidazole, wie sie in der DE-A 196 05 509 beschrieben sind, in üblichen Mengen als weitere Inhibitoren eingesetzt werden.

Der pH-Wert der erfindungsgemäßen Wärmeträgerkonzentrate liegt üblicherweise im Bereich von 6 bis 11, vorzugsweise 7 bis 10, insbesondere 7,5 bis 10. Dabei wird der gewünschte pH-Wert in der Regel durch Zugabe von Alkalimetallhydroxid zur Formulierung eingestellt. Zur Einstellung des pH-Wertes sind festes Natrium- oder Kaliumhydroxid und wässrige Natron- und Kalilauge besonders geeignet.

Die erfindungsgemäßen Konzentrate enthalten kein Borat.

Die erfindungsgemäßen Wärmeträgerflüssigkeit-Konzentrate enthalten vorzugsweise weiterhin ein Gefrierpunktemiedrigungsmittel, das ausgewählt ist aus Alkylenglykolen und deren Derivaten. Das Gefrierpunktserniedrigungsmittel ist vorzugsweise zu mindestens 75 Gew.%, mehr bevorzugt mindestens 85 Gew.-%, in den erfindungsgemäßen Konzentraten vorhanden.

Zum Einsatz in den erfindungsgemäßen Konzentraten eignen sich zum einen niedrige Alkylenglykole und deren Derivate, beispielsweise Ethylenglykol und 1,2-Propylenglykol. Es sind aber auch höhere Glykole und Glykolether geeignet, beispielsweise Diethylenglykol, Dipropylenglykol, Tri- und Tetraethylenglykol, Polyethylenglykol, Monoether von Glykolen, beispielsweise der Methyl-, Ethyl-, Propyl- und Butylether von Ethylenglykol, Propylenglykol, Diethylenglykol und Dipropylenglykol. Weiterhin eignen sich auch 1,3-Propandiol und Glyzerin. Es kann ein einziges Lösungsmittel oder ein Gemisch von zwei oder mehreren Lösungsmitteln verwendet werden.

Vorzugsweise wird Ethylenglykol und/oder 1,2-Propylenglykol, insbesondere 1,2-Propylenglykol verwendet.

In einer bevorzugten Ausführungsform basiert das Gefrierpunktserniedrigungsmittel auf 1,2-Propylenglykol oder Mischungen davon mit anderen Polyalkoholen, wobei mindestens 85 Gew.-%, vorzugsweise 90 Gew.-% 1,2-Propylenglykol in der Mischung enthalten sind.

Als weitere übliche Hilfsmittel können die erfindungsgemäßen Wärmeträgerkonzentrate in üblichen geringen Mengen noch Entschäumer, vorzugsweise in Mengen von 0,003 bis 0,008 Gew.-%, Farbstoffe sowie Bitterstoffe aus Gründen der Hygiene und der Sicherheit im Falle eines Verschluckens, beispielsweise vom Typ Denatoniumbenzoat, enthalten. Gegenstand der vorliegenden Erfindung sind auch gebrauchsfertige wässrige Wärmeträgerflüssigkeiten mit einem erniedrigten Gefrierpunkt und deren Verwendung in Solaranlagen, welche Wasser und 10 bis 90 Gew.-%, insbesondere 20 bis 60 Gew.-% der erfindungsgemäßen Wärmeträgerkonzentrate umfassen.

Die erfindungsgemäßen Wärmeträgerkonzentrate zeichnen sich nicht nur durch eine effektive Korrosionsinhibierung der eingangs aufgezählten Metalle bzw. Legierungen und eine gute Hochtemperaturstabilität aus, sondern bewirken darüber hinaus vor allem zusätzlich einen sehr guten Schutz gegen Glaskorrosion beim Einsatz in modernen Solaranlagen, bei denen die Wärmeträgerflüssigkcit direkten Kontakt mit dem Glas der Solaranlage, beispielsweise den Glasröhren, hat.

Das nachfolgende Beispiel soll die Erfindung erläutern, ohne sie jedoch zu beschränken.

### Beispiele

Die Herstellung der erfindungsgemäßen Wärmeträgerkonzentrate kann durch Zusammenmischen der angegebenen Komponenten, so wie nachfolgend exemplarisch für das erfindungsgemäße Konzentrat 1 beschrieben, geschehen.

| | Konzentrat 1 | Vergleichs-konzentrat A | Vergleichs-konzentrat B |
|---|---|---|---|
| | Gew.-% | Gew.-% | Gew.-% |
| 1,2-Propylenglykol | 94 | 94 | 94 |
| Polyacrylsäure (Sokalan® CP 10 S) | < 0,5 | <0,5 | <0,5 |
| Kalilauge (50 %-ig) | < 0,3 | < 0,3 | < 0,3 |
| Tolutriazol | < 0,2 | < 0,2 | < 0,2 |
| Benzotriazol | < 0,1 | < 0,1 | < 0,1 |
| Natriummolybdat Dihydrat | < 0,1 | < 0,1 | < 0,1 |
| Hydroxyalkylamin | < 5 | < 5 | < 5 |
| Entschäumer (Pluriol® PE 10100) | 40 ppm | 40 ppm | 40 ppm |
| Borax (Natriumtetraborat x 10 H₂O) | --- | --- | 0,20 |
| Natriummetasilikat | 0,20 | --- | -- |
| (mit Silikophosphonat stabilisiert) | | | |
| Wasser | Rest | Rest | Rest |

1,2-Propylenglykol wurde vorgelegt und unter Rühren bei Raumtemperatur nacheinander mit Polyacrylsäure, Kalilauge, Tolutriazol, Benzotriazol, Natriummolybdat Dihydrat, dem Hydroxyalkylamin und Entschäumer versetzt. Nach vollständigem Lösen aller Einsatzstoffe wurde das zuvor im Verhältnis 1 : 9 mit Wasser verdünnte, mit Silikophosphonat stabilisierte Natriummetasilikat zugegeben und so lange gerührt, bis eine klare, homogene Flüssigkeit vorlag.

Das so erhaltene erfindungsgemäße Konzentrat 1 und die analog hergestellten Vergleichskonzentrate A und B wurden mit Wasser im Verhältnis 45 : 55 verdünnt und als erfindungsgemäßes Beispiel 1 und als Vergleichsbeispiele A und B in den nachfolgend beschriebenen Versuchen geprüft.

### A Glaskorrosion

Für die Prüfung werden Borosilikatglas-Ampullen (Abmessungen in mm: 14,75 x 0,55) verwendet. Jedes Behältnis wird zweimal mit destilliertem Wasser und einmal mit bidestilliertem Wasser gespült. Nach einer Trockenzeit von ca. einer Stunde bei 150°C werden die Ampullen auf Raumtemperatur abgekühlt, außen mit Ethanol gesäubert und gewogen. Die Ampullen werden nun mit 5,5 ml Prüflösung gefüllt, mit Alufolie verschlossen und 24 Stunden bei 135°C mit Autoklaven (Typ 112 der Firma KSG Sterilisatoren GmbH, 82140 Olching, Temperaturregelung über Thermoelement direkt in jeweils einem Probanden) belassen.

Die Behältnisse werden aus dem Autoklaven unter Wahrung der üblichen Vorsichtsmaßnahmen herausgenommen und innerhalb von einer Stunde auf Raumtemperatur abgekühlt. Die Ampullen werden entleert, ca. fünfmal mit destilliertem Wasser gespült, wiederum ca. eine Stunde bei 150°C getrocknet, abgekühlt und gewogen.

Die Prüfergebnisse mit dem erfindungsgemäßen Beispiel 1 und den Vergleichsbeispielen A und B sind der Tabelle 1 zu entnehmen.

**Tabelle 1: Prüfung der Beständigkeit von Borosilikatglas**

| | Beispiel 1 | Vergleichsbeispiel A | Vergleichsbeispiel B |
|---|---|---|---|
| **Glasamputlen** | **Gewichtsänderung [mg]** | **Gewichtsänderung [mg]** | **Gewichtsänderung [mg]** |
| 1 | + 0,1 | -0,1 | -0,1 |
| 2 | + 0,1 | - 0,2 | - 0,3 |
| 3 | + 0,1 | - 0,2 | - 0,3 |
| 4 | +0,2 | - 0,2 | - 0,3 |
| 5 | +0,2 | -0,1 | - 0,3 |
| 6 | +0,2 | - 0,3 | -0,4 |
| 7 | +0,1 | - 0,2 | - 0,3 |
| 8 | +0,1 | 0 | - 0,4 |
| 9 | +0,1 | -0,4 | - 0,3 |
| 10 | +0,2 | - 0,1 | - 0,3 |
| 11 | +0,1 | - 0,2 | - 0,4 |
| 12 | +0,1 | -0,3 | -0,2 |
| 13 | +0,2 | - 0,4 | 0 |
| 14 | +0,1 | - 0,2 | - 0,3 |
| 15 | +0,2 | -0,2 | - 0,2 |
| **0̸ Gew.-Änderung** | **+0,1** | **- 0,2** | **- 0,3** |
| **pH vorher** | **9,7** | **8,4** | **9,7** |
| **pH nachher** | **9,7** | **8,5** | **9,6** |

Die Resultate belegen, dass erfindungsgemäße Wärmeträgerflüssigkeiten wie Beispiel 1 gegenüber dem Stand der Technik (Vergleichsbeispiel) einen deutlich verbesserten Glaskorrosionsschutz aufweisen; bei Beispiel 1 war an keinem einzigen der 15 Prüfkörper aus Glas ein Gewichtsverlust feststellbar. Das Vergleichsbeispiel B zeigt weiterhin den korrosiven Effekt von Boraten auf Glas.

### B Glassware Corrosion Test gemäß ASTM D 1384-97

Die Ergebnisse des Glassware Corrosion Tests nach ASTM D 1384-97 belegen außerdem, dass die erfindungsgemäßen Wärmeträgerflüssigkeiten auch Metalle zumindest gleich gut vor Korrosion schützen wie der Stand der Technik.

Die Tabelle 2 zeigt die Prüfungsergebnisse

**Tabelle 2: Glassware Corrosion Test gemäß ASTM D 1384-97**

| | Beispiel 1 | Vergleichsbeispiel A | Vergleichsbeispiel B |
|---|---|---|---|
| **Prüfköper** | **(Sewichtsänderung [mg/cm⁻²]** | **Gewichtsänderung [mg/cm²]** | **Gewichtsänderung [mg/cm²]** |
| Kupfer | - 1,1 | -0,7 | -1,4 |
| Weichlot | - 0,6 | - 0,9 | - 67,2 |
| Messing | - 0,8 | - 1,0 | - 2,2 |
| Stahl | +0,1 | - 0,3 | -0,1 |
| Grauguss | +0,6 | - 0,9 | - 0,6 |
| Gussaluminium | +0,9 | -1,5 | -1,9 |
| **pH vorher** | **9,7** | **8,4** | **9,7** |
| **pH nachher** | **9,6** | **8,6** | **9,2** |

## Patentansprüche

1. Wärmeträgerflüssigkeits-Konzentrat, enthaltend neben mindestens einem Glykol
a) 0,05 bis 10 Gew.-%, vorzugsweise 0,1 bis 5 Gew.-% eines oder mehrerer aliphatischer Amine der allgemeinen Formel (I), 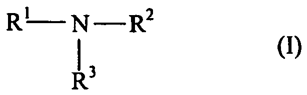 wobei R¹ bis R³ gleich oder verschieden sein können, und Wasserstoff, gegebenenfalls verzweigtes C₁-C₉-Alkyl oder C₁-C₉-Hydroxyalkyl bedeuten,
b) 0,005 bis 3 Gew.-%, vorzugsweise 0,01 bis 1 Gew.-%, eines oder mehrerer gegebenenfalls stabilisierter Silikate,
c) 0 bis 3 Gew.-%, vorzugsweise 0,01 bis 3 Gew.-%, eines oder mehrerer Korrosionsinhibitoren ausgewählt aus der Gruppe der Kohlenwasserstofftriazole und der Kohlenwasserstoffthiazole,
d) 0 bis 5 Gew.-%, vorzugsweise 0,01 bis 1 Gew.-%, eines oder mehrerer Alkalimetall-, Ammonium- oder substituierter Ammoniummolybdate und
e) 0 bis 1 Gew.-%, vorzugsweise 0,1 bis 0,5 Gew.-%, eines oder mehrerer polymerer Hartwasserstabilisatoren,
**dadurch gekennzeichnet, dass** das Konzentrat kein Borat enthält.

2. Konzentrat nach Anspruch 1, **dadurch gekennzeichnet, dass** die Komponente c) zu 0,01 bis 3 Gew.%, vorzugsweise 0,05 bis 1 Gew.-% enthalten ist.

3. Konzentrat nach Anspruch 1 oder 2, **dadurch gekennzeichnet, dass** in dem Amin der Formel (I) die Reste R¹ bis R³ ausgewählt sind aus Wasserstoff, linearen und verzweigten Alkylresten mit 1 bis 9 C-Atomen und linearen und verzweigten Alkylresten mit 1 bis 9 C-Atomen mit mindestens einem Hydroxysubstituenten, insbesondere die Reste R¹ bis R³ ausgewählt sind aus Wasserstoff, linearen und verzweigten Alkylresten mit 3 bis 4 C-Atomen und linearen und verzweigten Alkylresten mit 3 bis 4 C-Atomen, die mindestens einen Hydroxysubstituenten aufweisen.

4. Konzentrat nach einem der Ansprüche 1 bis 3, **dadurch gekennzeichnet, dass** das Amin einen Alkylrest mit mindestens einem Hydroxysubstituenten trägt, insbesondere das Amin ausgewählt ist aus Di-i-propanolamin und Butyldiethanolamin.

5. Konzentrat nach einem der Ansprüche 1 bis 4, **dadurch gekennzeichnet, dass** das Silikat der Komponente b) stabilisiert ist, vorzugsweise durch Organosilikophosphonate und/oder Organosilikosulfonate, insbesondere durch Organosilikophosphonate.

6. Konzentrat nach einem der Ansprüche 1 bis 5, **dadurch gekennzeichnet, dass** die Komponente b) ein Alkalimetallsilikat enthält, vorzugsweise ein Alkaliorthosilikat, Alkalimetasilikat, Alkalitetrasilikat oder Alkalisilikat; insbesondere Natriummetasilikat, wobei das Silikat gegebenenfalls mit Orthophosphaten stabilisiert ist.

7. Konzentrat nach einem der Ansprüche 1 bis 6, **dadurch gekennzeichnet, dass** die Komponente c) eine Mischung aus mindestens zwei Kohlenwasserstoffthiazolen, aus mindestens einem Kohlenwasserstofftriazol und einem Kohlenwasserstoffthiazol oder einer Mischung aus mindestens zwei verschiedenen Kohlenwasserstofftriazolen enthält, vorzugsweise eine Mischung aus mindestens zwei Kohlenwasserstofftriazolen enthält, wobei die Triazole insbesondere ausgewählt sind aus Benzotriazol, Tolutriazol und 1H-1,2,4-Triazol.

8. Konzentrat nach einem der Ansprüche 1 bis 7, **dadurch gekennzeichnet, dass** die Komponente d) Natriummolybdat, insbesondere Natriummolybdat-Dihydrat enthält.

9. Konzentrat nach einem der Ansprüche 1 bis 8, **dadurch gekennzeichnet, dass** die Komponente e) mindestens einen Hartwasserstabilisator auf Basis einer oder mehrerer Verbindungen aus der Gruppe Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und Copolymeren aus ungesättigten Carbonsäuren und Olefinen enthält.

10. Konzentrat nach einem der Ansprüche 1 bis 9, **dadurch gekennzeichnet, dass** weiterhin eines oder mehrere lösliche Salze des Magnesiums von organischen Säuren, vorzugsweise Magnesiumbenzolsulfonat, Magnesiummethansulfonat, Magnesiumacetat oder Magnesiumpropionat, ein oder mehrere Hydrocarbazole und/oder ein oder mehrere quaternierte Imidazole vorhanden sind.

11. Konzentrat nach einem der Ansprüche 1 bis 10, **dadurch gekennzeichnet, dass** der pH-Wert bei Werten von 6 bis 11, vorzugsweise 7 bis 10, insbesondere 7,5 bis 10 liegt.

12. Konzentrat nach einem der Ansprüche 1 bis 11, **dadurch gekennzeichnet, dass** das Gefrierpunktserniedrigungsmittel mindestens eine Verbindung enthält aus der Gruppe der niedrigen Alkylenglykole und deren Derivaten, vorzugsweise Ethylenglykol und 1,2-Propylenglykol, höheren Glykolen und Glykolethern, vorzugsweise Diethylenglykol, Dipropylenglykol, Tri- und/oder Tetraethylenglykol, Polyethylenglykol, Monoethem von Glykolen, vorzugsweise Methyl-, Ethyl-, Propyl- und Butylether von Ethylenglykol, Propylenglykol, Diethylenglykol und Dipropylenglykol, 1,3-Propandiol und Glyzerin, mehr bevorzugt Ethylenglykol und 1,3-Propylenglykol, insbesondere 1,2-Propylenglykol.

13. Konzentrat nach einem der Ansprüche 1 bis 12, **dadurch gekennzeichnet, dass** das Gefrierpunktserniedrigungsmittel zu ≥ 75 Gew.-%, vorzugsweise ≥ 85 Gew.-% in dem Konzentrat vorliegt.

14. Konzentrat nach einem der Ansprüche 1 bis 13, **dadurch gekennzeichnet, dass** das Gefrierpunktserniedrigungsmittel aus 1,2-Propylenglykol oder einer Mischung von 1,2-Propylenglykol mit einem oder mehreren anderen Polyalkoholen besteht, wobei die Mischung mindestens 85 Gew.-%, vorzugsweise 90 Gew.-% 1,2-Propylenglykol enthält.

15. Gebrauchsfertige wässrige Wärmeträgerflüssigkeit enthaltend Wasser und 10 bis 90 Gew.-% eines Wärmeträgerflüssigkeit-Konzentrats nach einem der Ansprüche 1 bis 14.

16. Verwendung eines Wärmeträgerflüssigkeit-Konzentrats enthaltend gemäß einem der Ansprüche 1 bis 14 in Solaranlagen, die so konstruiert sind, dass die Wärmeträgerflüssigkeit direkten Kontakt mit dem Glas der Solaranlage hat, **dadurch gekennzeichnet, dass** dieses kein Borat enthält.

## Claims

1. A heat transfer liquid concentrate comprising, in addition to at least one glycol,
a) from 0.05 to 10, preferably from 0.1 to 5, % by weight of one or more aliphatic amines of the general formula (I), 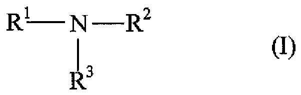 where R¹ to R³ may be identical or different and are hydrogen, straight-chain or branched C₁-C₉-alkyl or C₁-C₉-hydroxya.lkyl,
b) from 0.005 to 3, preferably from 0.01 to 1, % by weight of one or more silicates which may have been stabilized,
c) from 0 to 3, preferably from 0.01 to 3, % by weight of one or more corrosion inhibitors selected from the group consisting of the hydrocarbon-triazoles and of the hydrocarbon-thiazoles,
d) from 0 to 5, preferably from 0.01 to 1, % by weight of one or more alkali metal, ammonium or substituted ammonium molybdates and
e) from 0 to 1, preferably from 0.1 to 0.5, % by weight of one or more polymeric hard water stabilizers,
wherein the concentrate comprises no borate.

2. The concentrate according to claim 1, wherein the component c) is present in an amount of from 0.01 to 3, preferably from 0.05 to 1, % by weight.

3. The concentrate according to claim 1 or 2, wherein, in the amine of the formula (I), R¹ to R³ are selected from hydrogen, linear and branched alkyl radicals with 1 to 9 carbon atoms and linear and branched alkyl radicals with 1 to 9 carbon atoms with at least one hydroxyl substituent, in particular R¹ to R³ are selected from hydrogen, linear and branched alkyl radicals with 3 or 4 carbon atoms and linear and branched alkyl radicals with 3 or 4 carbon atoms which have at least one hydroxyl substituent.

4. The concentrate according to any of claims 1 to 3, wherein the amine carries an alkyl radical having at least one hydroxyl substituent, in particular the amine is selected from diisopropanolamine and butyldiethanolamine.

5. The concentrate according to any of claims 1 to 4, wherein the silicate of component b) is stabilized, preferably by organosilicophosphonates and/or organosilicosulfonates, in particular by organosilicophosphonates.

6. The concentrate according to any of claims 1 to 5, wherein component b) comprises an alkali metal silicate, preferably an alkali metal orthosilicate, alkali metal metasilicate, alkali metal tetrasilicate or alkali metal silicate, in particular sodium metasilicate, the silicate being stabilized, if required, with orthophosphates.

7. The concentrate according to any of claims 1 to 6, wherein component c) comprises a mixture of at least two hydrocarbon-thiazoles, a mixture of at least one hydrocarbon-triazole and one hydrocarbon-thiazole or a mixture of at least two different hydrocarbon-triazoles, preferably a mixture of at least two hydrocarbon-triazoles, the triazoles being selected particularly from benzotriazole, tolutriazole and 1H-1,2,4-triazole.

8. The concentrate according to any of claims 1 to 7, wherein component d) comprises sodium molybdate, in particular sodium molybdate dihydrate.

9. The concentrate according to any of claims 1 to 8, wherein component e) comprises at least one hard water stabilizer based on one or more compounds from the group consisting of polyacrylic acid, polymaleic acid, acrylic acid/maleic acid copolymers, polyvinylpyrrolidone, polyvinylimidazole, vinylpyrrolidone/vinylimidazole copolymers and copolymers of unsaturated carboxylic acids and olefins.

10. The concentrate according to any of claims 1 to 9, wherein furthermore one or more soluble magnesium salts of organic acids, preferably magnesium benzenesulfonate, magnesium methanesulfonate, magnesium acetate or magnesium propionate, one or more hydrocarbazoles and/or one or more quaternized imidazoles are present.

11. The concentrate according to any of claims 1 to 10, wherein the pH is from 6 to 11, preferably from 7 to 10, in particular from 7.5 to 10.

12. The concentrate according to any of claims 1 to 11, wherein the freezing point depressant comprises at least one compound from the group consisting of the lower alkylene glycols and derivatives thereof, preferably ethylene glycol and 1,2-propylene glycol, higher glycols and glycol ethers, preferably diethylene glycol, dipropylene glycol, tri- and/or tetraethylene glycol, polyethylene glycol, monoethers of glycols, preferably methyl, ethyl, propyl and butyl ethers of ethylene glycol, propylene glycol, diethylene glycol and dipropylene glycol, 1,3-propanediol and glycerol, more preferably ethylene glycol and 1,3-propylene glycol, in particular 1,2-propylene glycol.

13. The concentrate according to any of claims 1 to 12, wherein the freezing point depressant is present in the concentrate in an amount of ≥ 75, preferably ≥ 85, % by weight.

14. The concentrate according to any of claims 1 to 13, wherein the freezing point depressant comprises 1,2-propylene glycol or a mixture of 1,2-propylene glycol with one or more other polyalcohols, the mixture comprising at least 85, preferably 90, % by weight of 1,2-propylene glycol.

15. A ready-to-use aqueous heat transfer liquid comprising water and from 10 to 90% by weight of a heat transfer liquid concentrate according to any of claims 1 to 14.

16. The use of a heat transfer liquid concentrate according to any of claims 1 to 14 in solar plants which are constructed in such a way that the heat transfer liquid is in direct contact with the glass of the solar plant, wherein said heat transfer liquid concentrate comprises no borate.

## Revendications

1. Concentrat de liquide caloporteur, contenant, outre au moins un glycol
a) 0,05 à 10% en poids, de préférence 0,1 à 5% en poids d'une ou de plusieurs amines aliphatiques de formule générale (I) 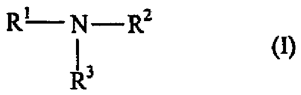 où R¹ à R³ peuvent être identiques ou différents et signifient hydrogène ; C₁-C₉-alkyle ou C₁-C₉-hydroxyalkyle, le cas échéant ramifié,
b) 0,005 à 3% en poids, de préférence 0,01 à 1% en poids d'un ou de plusieurs silicates le cas échéant stabilisés,
c) 0 à 3% en poids, de préférence 0,01 à 3% en poids, d'un ou de plusieurs inhibiteurs de corrosion, choisis dans le groupe des triazoles hydrocarbonés et des thiazoles hydrocarbonés,
d) 0 à 5% en poids, de préférence 0,01 à 1% en poids, d'un ou de plusieurs molybdates de métal alcalin, d'ammonium ou d'ammonium substitué et
e) 0 à 1% en poids, de préférence 0,1 à 0,5% en poids d'un ou de plusieurs stabilisateurs polymères d'eau dure,
**caractérisé en ce que** le concentrat ne contient pas de borate.

2. Concentrat selon la revendication 1, **caractérisé en ce que** le composant c) est contenu à raison de 0,01 à 3% en poids, de préférence de 0,05 à 1% en poids.

3. Concentrat selon la revendication 1 ou 2, **caractérisé en ce que** dans l'amine de formule (I), les radicaux R¹ à R³ sont choisis parmi l'hydrogène, les radicaux alkyle linéaires et ramifiés comprenant 1 à 9 atomes de carbone et les radicaux alkyle linéaires et ramifiés comprenant 1 à 9 atomes de carbone présentant au moins un substituant hydroxy, les radicaux R¹ et R³ étant en particulier choisis parmi l'hydrogène, les radicaux alkyle linéaires et ramifiés comprenant 3 à 4 atomes de carbone et les radicaux alkyle linéaires et ramifiés comprenant 3 à 4 atomes de carbone, qui présentent au moins un substituant hydroxy.

4. Concentrat selon l'une quelconque des revendications 1 à 3, **caractérisé en ce que** l'amine porte un radical alkyle présentant au moins un substituant hydroxy, l'amine étant en particulier choisie parmi la di-i-propanolamine et la butyldiéthanolamine.

5. Concentrat selon l'une quelconque des revendications 1 à 4, **caractérisé en ce que** le silicate du composant b) est stabilisé, de préférence par des organosilico-phosphonates et/ou des organosilicosulfonates, en particulier par des organosilico-phosphonates.

6. Concentrat selon l'une quelconque des revendications 1 à 5, **caractérisé en ce que** le composant b) contient un silicate de métal alcalin, de préférence un orthosilicate de métal alcalin, un métasilicate de métal alcalin, un tétrasilicate de métal alcalin ou un silicate de métal alcalin ; en particulier le métasilicate de sodium, le silicate étant le cas échéant stabilisé par des orthophosphates.

7. Concentrat selon l'une quelconque des revendications 1 à 6, **caractérisé en ce que** le composant c) contient un mélange d'au moins deux thiazoles hydrocarbonés, d'au moins un triazole hydrocarboné et d'un thiazole hydrocarboné ou un mélange d'au moins deux triazoles d'hydrocarbure différents, de préférence un mélange d'au moins deux triazoles hydrocarbonés, les triazoles étant en particulier choisis parmi le benzotriazole, le tolutriazole et le 1H-1,2,4-triazole.

8. Concentrat selon l'une quelconque des revendications 1 à 7, **caractérisé en ce que** le composant d) contient du molybdate de sodium, en particulier le molybdate de sodium dihydraté.

9. Concentrat selon l'une quelconque des revendications 1 à 8, **caractérisé en ce que** le composant e) contient au moins un stabilisateur d'eau dure à base d'un ou de plusieurs composés du groupe formé par le poly(acide acrylique), le poly(acide maléique), les copolymères d'acide acrylique-acide maléique, la polyvinylpyrrolidone, le polyvinylimidazole, les copolymères de vinylpyrrolidone-vinylimidazole et les copolymères d'acides carboxyliques insaturés et d'oléfines.

10. Concentrat selon l'une quelconque des revendications 1 à 9, **caractérisé en ce qu'**il contient en outre un ou plusieurs sels solubles du magnésium d'acides organiques, de préférence le benzènesulfonate de magnésium, le méthanesulfonate de magnésium, l'acétate de magnésium ou le propionate de magnésium, un ou plusieurs hydrocarbazoles et/ou un ou plusieurs imidazoles quaternaires.

11. Concentrat selon l'une quelconque des revendications 1 à 10, **caractérisé en ce que** le pH se situe à des valeurs de 6 à 11, de préférence de 7 à 10, en particulier de 7,5 à 10.

12. Concentrat selon l'une quelconque des revendications 1 à 11, **caractérisé en ce que** l'agent de diminution du point de congélation contient au moins un composé du groupe formé par les alkylèneglycols inférieurs et leurs dérivés, de préférence l'éthylèneglycol et le 1,2-propylèneglycol, les glycols supérieurs et les glycoléthers, de préférence le diéthylèneglycol, le dipropylèneglycol, le triéthylèneglycol et/ou le tétraéthylèneglycol, le polyéthylèneglycol, les monoéthers de glycols, de préférence le méthyléther, l'éthyléther, le propyléther et le butyléther d'ëthylèneglycol, le propylèneglycol, le diéthylèneglycol et le dipropylèneglycol, le 1,3-propanediol et le glycérol, plus préférablement l'éthylèneglycol et le 1,3-propylèneglycol, en particulier le 1,2-propylèneglycol.

13. Concentrat selon l'une quelconque des revendications 1 à 12, **caractérisé en ce que** l'agent de diminution du point de congélation se trouve dans le concentrat à raison de ≥ 75% en poids, de préférence de ≥ 85% en poids.

14. Concentrat selon l'une quelconque des revendications 1 à 13, **caractérisé en ce que** l'agent de diminution du point de congélation est constitué par du 1,2-propylèneglycol ou un mélange de 1,2-propylèneglycol avec un ou plusieurs autres polyalcools, le mélange contenant au moins 85% en poids, de préférence 90% en poids de 1,2-propylèneglycol.

15. Liquide caloporteur aqueux prêt à l'emploi, contenant de l'eau et 10 à 90% en poids d'un concentrat de liquide caloporteur selon l'une quelconque des revendications 1 à 14.

16. Utilisation d'un concentrat de liquide caloporteur selon l'une quelconque des revendications 1 à 14 dans des installations solaires conçues de manière telle que le liquide caloporteur est en contact direct avec le verre de l'installation solaire, **caractérisée en ce que** celui-ci ne contient pas de borate.
